# EUROPEAN PATENT APPLICATION

(11) **EP 4 629 241 A1**
(43) Date of publication of application: **08.10.2025**
(21) Application number: 23897659.1
(22) Date of filing: 23.11.2023
(51) Int. Cl.: G11B 7/24, G11B 7/135, G11B 7/24056, G11B 7/24097

(54) **STRAY LIGHT REDUCTION METHOD, OPTICAL DISC USING SAME, AND OPTICAL DISC ACCESSORY**

(30) Priority: 28.11.2022 JP 2022199811
(71) Applicant: Saitoh, Tamiya, Saitama-shi, Saitama 336-0911 (JP)
(72) Inventor: Saitoh, Tamiya, Saitama-shi, Saitama 336-0911 (JP)
(74) Representative: Valet Patent Services Limited
(86) International application number: PCT/JP2023/042093
(87) International publication number: WO 2024/117011

(57) **Abstract**

A feature of the present invention is that a stray light diffusing function has been newly added. The stray light reducing method according to the present invention comprises a bi-layer absorber consisting of stray light diffusing layer (5) transmitting and diffusing stray light, stray light absorbing layer (6) transmitting and absorbing stray light. The optical disc according to the present invention incorporates a bi-layer absorber. The optical disc accessory according to the present invention has a form of touching or adhering or fixing a bi-layer absorber to the optical disc. As an effect of the optical disc and the optical disc accessory according to the present invention, the incorporated bi-layer absorber efficiently absorbs the stray light generated in a disc substrate (1) and improves sound quality.

## Description

### [Technical Field]

The present invention relates to an optical disc and an optical disc accessory
equipped with stray light countermeasures.

### [Background of the invention]

Currently in Japan, as a countermeasure against stray light in optical discs, (Measure 1) Greening of the inner and outer edge surfaces, (Measure 2) Roughening or deformation of the outer edge surface, and (Measure 3) Cutting the outer edge surface at an angle and blackening, are known. Related products include a device for implementing measure 3 and a dedicated green paint. On the other hand, as a stray light countermeasure implemented by music production companies and sound manufacturers, (Measure 4) Greening the label surfaces of CDs and SACDs, and (Measure 5) Partial greening of CD clampers, are known.

In general, the conventional art in Japan can be summarized into two types: absorbing the stray light on green or black surfaces or reflecting it in an irregular direction using rough surfaces or the like. However, after this, new stray light countermeasures have not been devised for a long time, and it can be said that they are in a stalemate.

### [Summary of the invention]

### [Problems to be solved by the invention]

In the subjective evaluation of the present inventor, it is considered that the conventional stray light countermeasures are insufficiently effective, and music lovers who are particular about sound quality are not satisfied. The key issues to be addressed are as follows. (Issue 1) Extremely small absorbing area: Since stray light has an extremely strong straightness, the minimum diameter of 1 µm does not change even if reflection is repeated. In other words, the absorbing area is too small for the powerful energy of stray light. (Issue 2) Limitations of absorbing methods using flat surfaces (green or black surfaces)

The object of the present invention is to provide optical discs and optical disc accessories that solve the two issues and eliminate the sound quality difficulties that have been pointed out for a long time since the advent of the CD.

### [Measures to solve the problem]

A feature of the present invention is that a stray light diffusing function has been newly added. The stray light reducing method according to the present invention comprises a bi-layer absorber in which stray light diffusing layer 5 and stray light absorbing layer 6 (hereinafter referred to as layer-A, layer-B) are connected and fixed. Layer-A uses one of a member made of a material (refers to a material provided by mainly chemical manufacturers under the name of Light Diffusing Film etc. in Japan, hereinafter referred to as material-A) transmitting and diffusing light, a translucent body of same color as stray light, a translucent body of same color as stray light made of material-A those have a property of transmitting and diffusing stray light. Layer-B uses one of a black translucent body, a translucent body of complementary color of stray light, a black translucent body made of material-A, a translucent body of complementary color of stray light made of material-A those have a property of transmitting and absorbing stray light. The thickness and shades of layer-A, layer-B are optimized by auditioning. The bi-layer absorber is arranged in such a way that more stray light collides with layer-A.

The optical disc according to the present invention incorporates a bi-layer absorber. The optical disc accessory according to the present invention has a form of touching or adhering or fixing a bi-layer absorber to the optical disc.

### [Effects of the invention]

The stray light reducing method according to the present invention has a higher stray light absorption effect than conventional measures. First, in layer-A, it diffuses three-dimensionally while transmitting the colliding stray light. Next, in layer-B, diffused and diluted stray light is transmitted and absorbed three-dimensionally. As a result of these, the two issues are solved, and the synergistic effect of the bi-layer enables rational and efficient stray light absorbing action.

As an effect of the optical disc according to the present invention, the incorporated bi-layer absorber efficiently absorbs the stray light generated in a disc substrate 1 and improves sound quality. In the subjective evaluation of the present inventor using the CD, the sound quality improvement effect is higher than the conventional countermeasure. Specifically, (Difficulty 1) Hard and cold tone, (Difficulty 2) Atrophy and pressure, (Difficulty 3) Lack of sound field, which many people point out are improved, (Advantage 1) Stretching and enhancement of the low frequency range, (Advantage 2) Increasing the amount of information, (Advantage 3) Improving the sense of presence and dynamism, can be obtained. By using the optical disc accessory according to the present invention for an optical disc without a bi-layer absorber, the same effect as the optical disc according to the present invention can be obtained. The present invention can be used on all current optical discs.

### [Brief description of the drawings]

Fig. 1 is a perspective view and a partial cross-sectional view of the CD
   according to the present invention.
Fig. 2 is a perspective view and a partial cross-sectional view of the CD accessory according to the present invention.

### [Embodiments for implementing the invention]

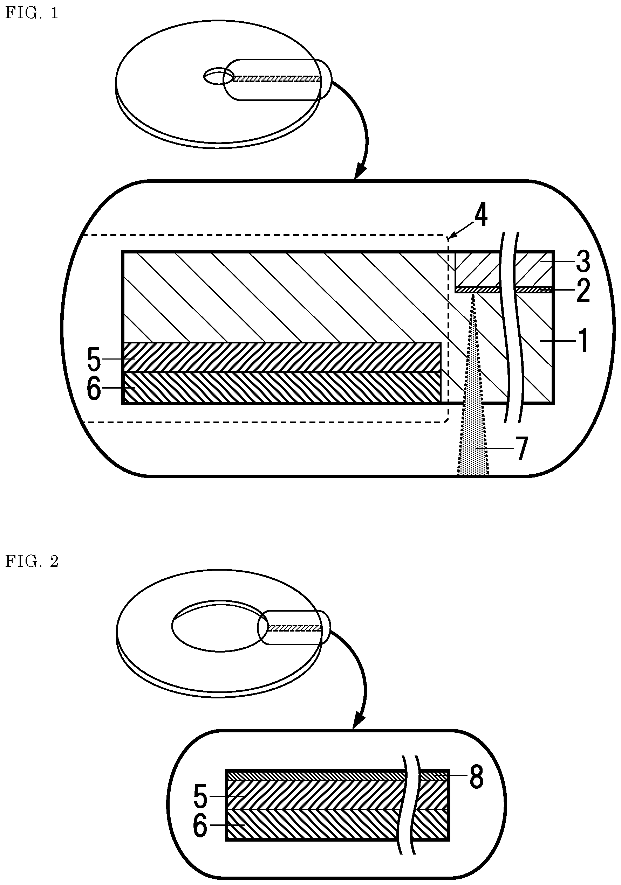

Fig. 1 shows an embodiment of CD according to the present invention.
Layer-A, layer-B are made of material-A and have a washer shape (inner diameter: 15 mm outer diameter: 43 mm thickness: 0.25 mm) and connected and fixed to clamping part 4. Layer-A is translucent red and placed on the stray light generated side. Layer-B is translucent green. Except for layer-A, layer-B the other partial will follow the current CD.

Fig. 2 shows an embodiment of CD accessory according to the present invention. Layer-A, layer-B are made of material-A and have a washer shape (inner diameter: 15 mm outer diameter: 33 mm thickness: 0.15 mm) and connected and fixed. Layer-A is translucent red, and a colorless and transparent adhesive is applied to the upper surface. Layer-B is translucent green.
This embodiment is used by adhering it to clamping part 4 of the CD.

### [Explanation of the code]

- 1: Disc substrate
- 2: Aluminum reflective layer
- 3: Protective layer
- 4: Clamping part
- 5: Stray light diffusing layer (first layer of the bi-layer absorber, also referred to as layer-A)
- 6: Stray light absorbing layer (second layer of the bi-layer absorber, also referred to as layer-B )
- 7: Red laser light
- 8: Adhesive coating layer

## Claims

1. A method for reducing stray light in an optical disc device comprising one or more of a member made of a material transmitting and diffusing light, a translucent body of same color as stray light, a black translucent body, a translucent body of complementary color of stray light those used by a bi-layer absorber consisting of stray light diffusing layer (5), stray light absorbing layer (6).

2. An optical disc comprising a bi-layer absorber according to claim 1.

3. An optical disc accessory comprising a bi-layer absorber according to claim 1.
